# EUROPEAN PATENT APPLICATION

(11) **EP 4 535 538 A1**
(43) Date of publication of application: **09.04.2025**
(21) Application number: 23907381.0
(22) Date of filing: 31.10.2023
(51) Int. Cl.: H01M 50/342, H01M 50/184, H01M 50/186, H01M 50/197, H01M 50/193, H01M 50/191, H01M 50/198, H01M 50/178

(54) **BATTERY CELL, BATTERY MODULE COMPRISING BATTERY CELL, AND SEALING APPARATUS**

(30) Priority: 21.12.2022 KR 20220181114
(71) Applicant: LG Energy Solution, Ltd., Seoul 07335 (KR)
(72) Inventor: NOH, Hyung-Jun, Daejeon 34122 (KR); JUN, In-Kook, Daejeon 34122 (KR); KIM, Hyun-Tae, Daejeon 34122 (KR)
(74) Representative: Plasseraud IP
(86) International application number: PCT/KR2023/017172
(87) International publication number: WO 2024/136095

(57) **Abstract**

A battery cell includes an electrode assembly and a pouch case for sealing the electrode assembly together with an electrolyte, wherein the pouch case includes a receiving portion in which the electrode assembly is accommodated; and a sealing portion disposed on the outside of the receiving portion to seal the electrode assembly, wherein the sealing portion includes a strong sealing section and a weak sealing section, and a venting path including an inlet located on the inner surface of the sealing portion to be connected to the receiving portion and an outlet located on the outer surface of the sealing portion to be integrally connected to the inlet is formed by the weak sealing section in the sealing portion.

## Description

### TECHNICAL FIELD

The present disclosure relates to a battery cell, a battery module including the battery cell, and a sealing device for manufacturing the battery cell, and more specifically, to a battery cell for smoothly venting internal gas, a battery module, and a sealing device for manufacturing such a battery cell. The present application claims priority to Korean Patent Application No. 10-2022-0181114 filed on December 21, 2022 in the Republic of Korea, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Among the general secondary battery structures, a pouch-type secondary battery has a structure in which an electrode assembly is accommodated in a pouch case to form a battery cell. A conventional battery cell has a problem in that a thermal fusion process is performed on the entire upper and lower cases of the pouch case, resulting in strong bonding of the entire pouch case, and thus, even if internal gas is generated due to swelling or the like, it cannot be properly ventilated, and the generated internal gas continue to remain inside and accumulate.

If an external impact or an electrical short circuit occurs while the swelling phenomenon is maintained and accelerated due to this problem, a fatal defect in which the battery cell explodes due to a chemical chain reaction with internal chemical compositions may occur.

In addition, in a conventional battery cell, when the pouch case fails to withstand the internal pressure of gas and bursts to discharge the gas, there is a problem of being difficult to predict or control which part of the pouch case will burst and in which direction the gas will be discharged. Such uncontrolled venting may cause safety issues of secondary batteries.

### DISCLOSURE

### Technical Problem

The present disclosure is directed to providing a battery cell capable of inducing the internal gas generated inside a pouch case to be vented in a specific direction at a specific site.

The present disclosure is also directed to providing a battery module including the same.

The present disclosure is still also directed to providing a sealing device for manufacturing such a battery cell.

### Technical Solution

A battery cell according to an embodiment of the present disclosure for solving the above problem includes an electrode assembly and a pouch case for sealing the electrode assembly together with an electrolyte,
wherein the pouch case includes:
a receiving portion in which the electrode assembly is accommodated; and
a sealing portion disposed on the outside of the receiving portion to seal the electrode assembly,
wherein the sealing portion includes a strong sealing section and a weak sealing section, and a venting path including an inlet located on the inner surface of the sealing portion to be connected to the receiving portion and an outlet located on the outer surface of the sealing portion to be integrally connected to the inlet is formed by the weak sealing section in the sealing portion.

Through the venting path, the gas generated in the receiving portion may be discharged to the outside of the receiving portion.

The sealing portion may have a first sealing portion extending in a first direction and having the venting path formed therein; and a second sealing portion extending in a second direction intersecting the first direction, wherein the venting path may include at least one length venting portion extending in the first direction; and a width venting portion extending in the second direction and connected to the length venting portion.

A length of the first sealing portion in the first direction may be greater than a length of the second sealing portion in the second direction, and a length of the length venting portion in the first direction may be greater than a length of the width venting portion in the second direction.

A lead of the electrode assembly may protrude through the second sealing portion.

The inlet may be located at one end of the first sealing portion, and the outlet may be located at the other end of the first sealing portion.

The sealing portion may further include a third sealing portion extending in the first direction; and a fourth sealing portion extending in the second direction, wherein the venting path may not be formed in the third sealing portion.

The sealing portion may include an inner resin layer, a metal layer covering the inner resin layer, and an outer resin layer covering the metal layer, wherein the inner resin layer may include the venting path and an adhesive portion that contacts the venting path and seals the electrode assembly, wherein a sealing strength of the venting path may be less than a sealing strength of the adhesive portion.

A thickness of the venting path may be greater than a thickness of the adhesive portion.

A thickness of the metal layer may be constant, and a thickness of the outer resin layer may be constant.

A battery module according to an embodiment of the present disclosure for solving the above other problem includes battery cells according to an embodiment of the present disclosure described above; and a module case accommodating the battery cells, wherein each of the inlets of the battery cells is aligned side by side in one direction, and each of the outlets of the battery cells is aligned side by side in the one direction.

A sealing device according to an embodiment of the present disclosure for solving the above still other problem includes an upper sealing tool that applies pressure to a sealing portion from un upper part of the sealing portion included in the pouch case; and a lower sealing tool that applies pressure to the sealing portion from a lower part of the sealing portion included in the pouch case, wherein at least one of the upper sealing tool and the lower sealing tool has a step formed to correspond to a venting path including an inlet located on an inner surface of the sealing portion and an outlet located on an outer surface of the sealing portion to be integrally connected to the inlet.

A pressure applied to the sealing portion by the area where the step is formed may be smaller than a pressure applied to the sealing portion by an area where the step is not formed.

A body of at least one of the upper sealing tool and the lower sealing tool may have the step formed in an intaglio on a surface in contact with the sealing portion, so that a body thickness of the area where the step is formed may be smaller than a body thickness of the area where the step is not formed.

The sealing portion may have a first sealing portion extending in a first direction and having the venting path formed therein; and a second sealing portion extending in a second direction intersecting the first direction, wherein the venting path may include at least one length venting portion extending in the first direction; and a width venting portion extending in the second direction and connected to the length venting portion, wherein the step may be formed to correspond to the length venting portion and the width venting portion.

### Advantageous Effects

To solve the above problem, a battery cell according to embodiments of the present disclosure may include an electrode assembly and a pouch case for sealing the electrode assembly together with an electrolyte. The pouch case includes a receiving portion in which the electrode assembly is accommodated and a sealing portion disposed on the outside of the receiving portion to seal the electrode assembly, wherein a venting path including an inlet located on the inner surface of the sealing portion to be connected to the receiving portion and an outlet located on the outer surface of the sealing portion to be integrally connected to the inlet may be formed in the sealing portion.

A conventional battery cell has a problem of being unable to be properly discharged even if internal gas is generated due to swelling or the like, but the present disclosure may induce the internal gas to be vented in a specific direction through the venting path. In addition, by forming the venting path long along the long side of the pouch case, the accumulated flow rate value until the internal gas is vented can be increased, and more internal gas can be trapped inside the pouch case. Furthermore, since the venting path is formed in an existing pouch case, no additional volume is required by the venting path, and accordingly, the margin volume of the battery cell may be utilized to the maximum.

In the battery module according to the present disclosure, battery cells may be accommodated by aligning the venting path. Accordingly, it is possible to induce the internal gas of the battery cells to be vented in a specific direction. Therefore, the safety of the battery module may be improved.

The sealing device according to the present disclosure may include a sealing tool with a step formed to correspond to the venting path to be formed in the battery cell. It is possible to easily form a venting path in the battery cell by using the sealing device according to the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view for describing a battery cell according to an embodiment of the present disclosure.
FIG. 2 is an enlarged cross-sectional view of areas A and B of FIG. 1.
FIG. 3 is a plan view for describing the battery cell of FIG. 1.
FIG. 4 is an enlarged plan view of area C of FIG. 3.
FIG. 5 is a cross-sectional view taken along line I-I' of FIG. 4.
FIG. 6 is a perspective view for describing a method of manufacturing the battery cell of FIG. 1.
FIG. 7 is a perspective view for describing the sealing tool of FIG. 6.
FIG. 8 is a perspective view for describing a battery module including the battery cell of FIG. 1.

### BEST MODE

The present disclosure will become more apparent by describing preferred embodiments of the present disclosure in detail with reference to the accompanying drawings. The embodiments described herein are shown by way of example to help understanding of the present disclosure, and it should be understood that the present disclosure may be variously modified and implemented differently from the embodiments described herein. In addition, to help understanding of the present disclosure, the accompanying drawings are not illustrated on an actual scale, but the dimensions of some components may be exaggerated.

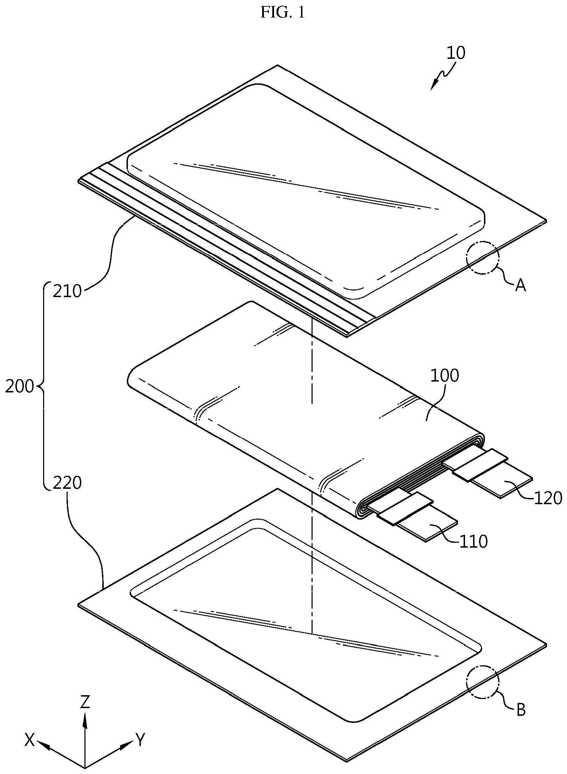

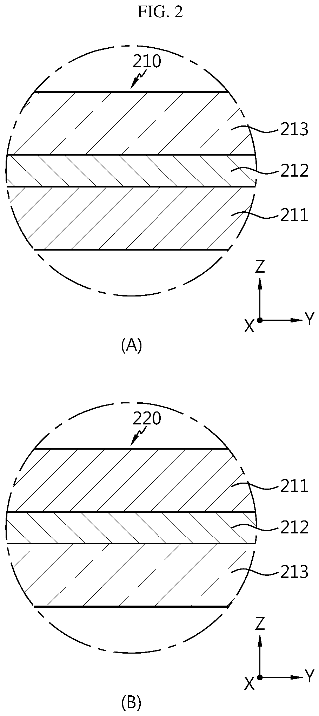

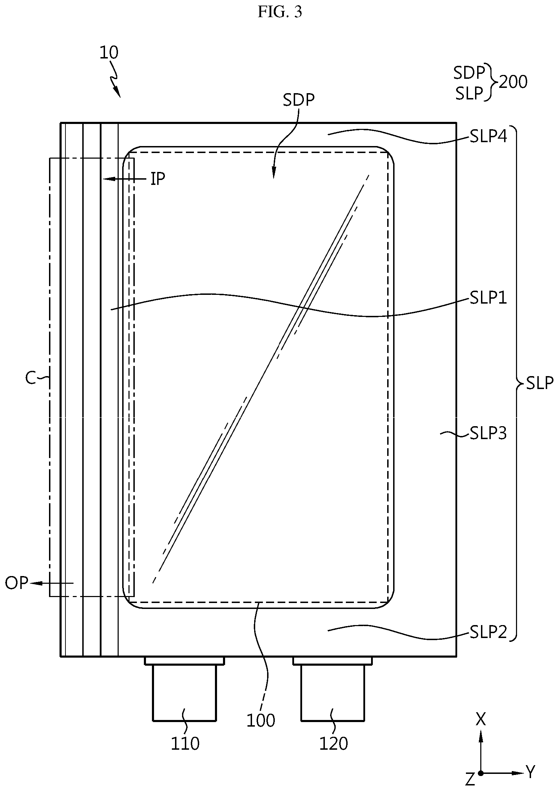

FIG. 1 is a perspective view for describing a battery cell according to an embodiment of the present disclosure, FIG. 2 is an enlarged cross-sectional view of areas A and B of FIG. 1, and FIG. 3 is a plan view for describing the battery cell of FIG. 1.

Referring to FIG. 1, a battery cell 10 according to an embodiment of the present disclosure may include an electrode assembly 100 and a pouch case 200. The battery cell 10 may have a rectangular shape including a long side extending in a first direction X and a short side extending in a second direction Y that intersects the first direction X, and may have a thickness in a third direction Z perpendicular to the first and second directions X, Y.

The electrode assembly 100 may include a negative electrode, a positive electrode, and a separator, wherein the negative electrode and the positive electrode are disposed alternately, and the separator may be interposed between the negative electrode and the positive electrode. The electrode assembly 100 may be a stack type electrode assembly, a stack/folding type electrode assembly, or a jelly roll type electrode assembly. For example, the stack type electrode assembly may have a structure in which positive electrodes and negative electrodes cut into units of a predetermined size are sequentially stacked with a separator interposed therebetween, and the stack/folding type electrode assembly may have a structure in which bi-cells or full-cells formed by stacking positive electrodes and negative electrodes cut into units of a predetermined size with a separator interposed therebetween are wound. The illustrated example is a jelly roll type, which may have a structure where a laminate of a positive electrode, a separator, and a negative electrode on a sheet is wound.

In addition, the electrode assembly 100 may have a positive electrode tab extending from the positive electrode and a negative electrode tab extending from the negative electrode. The positive electrode tab and the negative electrode tab may be respectively bonded to the positive electrode lead 110 and the negative electrode lead 120, and the positive electrode lead 110 and the negative electrode lead 120 may protrude to the outside to electrically connect the electrode assembly 100 and external application devices to each other. The illustrated example is a unidirectional battery. The positive electrode lead 110 and the negative electrode lead 120 protrude in parallel with each other from one side of the electrode assembly 100 to protrude in one direction of the electrode assembly 100, thereby forming a unidirectional battery. As another example, the positive electrode lead 110 and the negative electrode lead 120 each protrude from opposite sides of the electrode assembly 100 to protrude in both directions of the electrode assembly 100, thereby forming a bidirectional battery.

The pouch case 200 may seal the electrode assembly 100 together with an electrolyte, and to this end, it may include an upper case 210 and a lower case 220. The upper case 210 and the lower case 220 may be separate sheet members that are each cut, or may also be used by folding sheet members that are connected as one.

Referring to FIG. 2, each of the upper case 210 and the lower case 220 may have a layered structure including an inner resin layer 211, a metal layer 212, and an outer resin layer 213. The metal layer 212 may cover the inner resin layer 211, and the outer resin layer 213 may cover the metal layer 212.

The inner resin layers 211 of the upper case 210 and the lower case 220 may be in contact with each other. For mutual adhesion of the inner resin layers 211, the inner resin layers 211 may be formed of casted polypropylene (CPP), polypropylene (PP), or the like.

The metal layer 212 may be formed of an aluminum thin film to protect the electrode assembly 100 and the electrolyte, to complement the electrochemical properties of the battery cell 10, and to improve heat dissipation. At this time, in order to secure insulation between the battery cell 10 and the outside through the metal layer 212, the outer resin layer 213 may be formed of an insulating material, such as polyethylene terephthalate (PET) resin, nylon resin, or the like.

Referring to FIGS. 1 and 3, the pouch case 200 may be divided into a receiving portion SDP and a sealing portion SLP. The electrode assembly 100 may be accommodated in the receiving portion SDP, and the sealing portion SLP may be disposed on the periphery of the receiving portion SDP, so that the upper case 210 and lower case 220 described above may be in contact with each other to seal the electrode assembly 100.

The sealing portion SLP may have a first sealing portion SLP1 extending in the first direction X, a second sealing portion SLP2 extending in the second direction Y intersecting the first direction X, a third sealing portion SLP3 extending in the first direction X and facing the first sealing portion SLP1, and a fourth sealing portion SLP4 extending in the second direction Y and facing the second sealing portion SLP2.

For example, when the pouch case 200 has a rectangular shape, the first direction X may be a longitudinal direction forming the long side of the pouch case 200, and the second direction Y may be a width direction forming the short side of the pouch case 200. The positive electrode lead 110 and the negative electrode lead 120 protrude through the second sealing portion SLP2.

The illustrated example is a case in which the upper case 210 and the lower case 220 are separate sheet members, and thus four-sided sealing is performed. When the sheet member connected as one is folded and used, sealing may be omitted by allowing the sides of the electrode assembly 100 to be in tight contact with the folded part, and thus three-sided sealing may be performed. For example, the sealing portion SLP may be composed of only the first sealing portion SLP1, the second sealing portion SLP2, and the fourth sealing portion SLP4 without the third sealing portion SLP3.

A variety of materials may be used as the positive electrode, negative electrode, and electrolyte of the battery cell, and in general, a lithium-based oxide as the positive electrode, a carbon-based material as the negative electrode, and an organic solvent electrolyte containing lithium salt as the electrolyte may be mainly used. In this case, if the battery is overcharged or a sudden change in the electrical environment occurs, electrolyte decomposition may occur at the positive electrode and precipitation of lithium metal may occur at the negative electrode, and due to the heat generated by such chemical reactions, gas may be generated inside the receiving portion SDP.

In addition, organic solvents such as ethylene carbonate and propylene carbonate are used as electrolytes, and these organic solvents decompose at high temperatures to generate gas, which may cause swelling of the receiving portion SDP due to the resulting increase in pressure. This swelling phenomenon may cause an electrical short, and if an external impact is applied while swollen, the internal gas escapes to the outside, during which the occurrence of a spark or the like may lead to ignition, which is dangerous.

A conventional battery cell has a problem in that a thermal fusion process is performed on the entire upper and lower cases of the pouch case, resulting in strong bonding of the entire pouch case, and thus, even if internal gas is generated due to swelling or the like, the gas discharge location cannot be adjusted, resulting in venting at an arbitrary location, thereby causing electrolyte leakage, which may lead to fatal defects such as fire and explosion of the battery cell.

For this reason, it has become important to predict and control the direction of the gas discharge as the pouch case cannot withstand the internal pressure of the gas to burst in the battery cell.

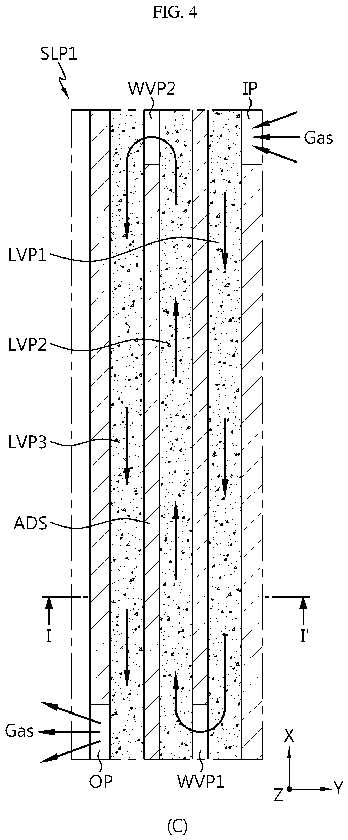

In order to solve the above-described defect, a venting path (e.g., the venting path VP in FIG. 4) may be formed in the first sealing portion SLP1 of the battery cell 10 according to embodiments of the present disclosure. The first sealing portion SLP1 may include a strong sealing section and a weak sealing section, and the venting path VP may be formed by the weak sealing section. The strong sealing section refers to a section that is sealed stronger than the surrounding area, and the weak sealing section refers to a section that is sealed weaker than the surrounding area. The section that is sealed stronger than the surrounding area is sealed with the pressure of a sealing tool that presses harder than the surrounding area. In the section that is sealed stronger than the surrounding area, the sealing strength (strength spreading in both directions) of the sealing surface after sealing is also greater than that of the surrounding area. The section that is sealed weaker than the surrounding area is sealed with the pressure of a sealing tool that presses softer than the surrounding area. In the section that is sealed weaker than the surrounding area, the sealing strength of the sealing surface after sealing is also smaller than that of the surrounding area. The strong sealing section and the weak sealing section are relative concepts, and the weak sealing section refers to a section that is sealed weaker than the strong sealing section. For example, the weak sealing section may be a section having a sealing strength of 60% to 80% of that of the strong sealing section.

According to the present disclosure, it is possible to induce the internal gas to be vented in a specific direction at a specific site through the venting path VP. If the venting location is random, there is a safety problem due to electrolyte leakage and the like. According to the present disclosure, the venting position may be controlled to a specific site of the battery cell 10 and in a specific direction, thereby improving safety.

In addition, as described later, by forming the venting path VP long along the long side direction of the sealing portion SLP, the accumulated flow rate value until the internal gas is vented can be increased, and more internal gas can be trapped inside the pouch case 200. That is, by delaying the venting time, the battery cell 10 can be used more safely for a longer time.

Furthermore, since the venting path VP is formed in the existing pouch case 200 rather than providing a separate space for forming the venting path VP, no additional volume is required by the venting path VP, and accordingly, the margin volume of the battery cell 10 may be utilized to the maximum. That is, the receiving portion SDP may be filled with the electrode assembly 100 as large as the receiving portion SDP without the need to provide a separate space to trap the internal gas, thereby being no loss of battery capacity.

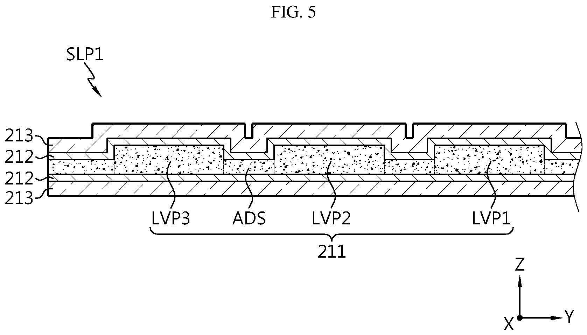

Hereinafter, the structure of the venting path of the battery cell according to an embodiment of the present disclosure will be described in more detail with reference to FIGS. 4 and 5.

FIG. 4 is an enlarged plan view of area C of FIG. 3, and FIG. 5 is a cross-sectional view taken along line I-I' of FIG. 4.

Referring to FIGS. 3 and 4, a venting path VP including an inlet IP, a first length venting portion LVP1, a first width venting portion WVP1, a second length venting portion LVP2, a second width venting portion WVP2, a third length venting portion LVP3, and an outlet OP may be formed in the first sealing portion SLP1. The venting path VP may include an inlet IP and an outlet OP integrally connected to the inlet IP. In an embodiment, the length venting portion of the venting path VP extends in the first direction X and at least one of it may be included in venting path VP, and the width venting portion of the venting path VP extends in the second direction Y and may be connected to the length venting portion. The number and location of the length venting portions and the width venting portions may be changed as necessary. In an embodiment, the length of the first sealing portion SLP1 in the first direction X is greater than the length of the second sealing portion SLP2 in the second direction Y. In this case, the length of the length venting portion in the first direction X is greater than the length of the width venting portion in the second direction Y.

The length and width of the first to third length venting portions LVP1, LVP2, LVP3 may be equal to each other. The first width venting portion WVP1 and the second width venting portion WVP2 may also have the same length and width. By implementing the first to third length venting portions LVP1, LVP2, LVP3 having the same length and width, and the first width venting portion WVP1 and the second width venting portion WVP2 having the same length and width, the vented internal gas may apply pressure evenly to the venting path VP, thereby improving the safety of the battery cell 10.

In an embodiment, the sealing portion SLP includes a first sealing portion SLP1 and a third sealing portion SLP3 in the long axis direction of the battery cell 10. The venting path VP may be formed only in the first sealing portion SLP1. That is, the venting path may not be formed in the third sealing portion SLP3. As the venting path VP through which the internal gas is vented is formed only in the first sealing portion SLP1, it is possible to induce the internal gas to be vented in a specific direction. However, the present disclosure is not limited thereto, and the venting path VP may be further formed in the second sealing portion SLP2, the third sealing portion SLP3, and/or the fourth sealing portion SLP4 as needed.

In the first sealing portion SLP1 where the venting path VP is formed, a portion excluding the venting path VP may be defined as an adhesive portion ADS. The venting path VP and the adhesive portion ADS are included in the inner resin layer 211 of the sealing portion SLP. The adhesive portion ADS is in contact with the venting path VP and may seal the electrode assembly 100.

In an embodiment, the sealing strength of the venting path VP may be less than the sealing strength of the adhesive portion ADS. The venting path VP may be a weak sealing section and the adhesive portion ADS may be a strong sealing section. For example, the sealing strength of the venting path VP may be 60% to 80% of the sealing strength of the adhesive portion ADS. As an example, the sealing strength of the adhesive portion ADS may be 0.2 MPa to 0.5 MPa, and the sealing strength of the venting path VP may be 0.12 MPa to 0.4 MPa.

By making the sealing strength of the venting path VP relatively smaller than the surrounding area, it is possible to induce the above-mentioned internal gas to be vented along the venting path VP. Specifically, when internal gas is generated and aggregated in the receiving portion SDP, the internal gas opens the inlet IP of the venting path VP having a relatively low sealing strength to allow the internal gas to stay in the corresponding space, thereby relaxing the internal pressure, and then, when more gas is generated and the internal pressure increases, the first length venting portion LVP1 connected to the inlet IP is opened to move the internal gas to the corresponding space, thereby relaxing the internal pressure. Afterwards, when more gas is generated, the internal pressure may be relieved by sequentially moving the gas through the first width venting portion WVP1, the second length venting portion LVP2, the second width venting portion WVP2, and the third length venting portion LVP3 as described above, and the gas may be ultimately vented to the outside through the outlet OP. In this way, the gas generated in the receiving portion SDP is released to the outside of the receiving portion SDP through the venting path VP.

In an embodiment, the inlet IP may be located on the inner surface of the first sealing portion SLP1 to be connected to the receiving portion SDP. The inner surface of the first sealing portion SLP1 indicates a side closer to the electrode assembly 100 even in the first sealing portion SLP1. The first length venting portion LVP1 is connected to the inlet IP and may extend in the first direction X. The first width venting portion WVP1 is connected to the first length venting portion LVP1 and may extend in the second direction Y. The second length venting portion LVP2 is connected to the first width venting portion WVP1 and may extend in the first direction X. The second width venting portion WVP2 is connected to the second length venting portion LVP2 and may extend in the second direction Y. The third length venting portion LVP3 is connected to the second width venting portion WVP2 and may extend in the first direction X. The outlet OP is connected to the third length venting portion LVP3 and may be located on the outer surface of the first sealing portion SLP1. The outer surface of the first sealing portion SLP1 indicates a side farther away from the electrode assembly 100 even in the first sealing portion SLP1.

In this case, the length of the first length venting portion LVP1 in the first direction X may be greater than the length of the first width venting portion WVP1 in the second direction Y.

In an embodiment, the inlet IP may be located at one end of the first sealing portion SLP1 in the longitudinal direction, and the outlet OP may be located at the other end opposite to the one end of the first sealing portion SLP1. In other words, an odd number of length venting portions (e.g., the first to third length venting portions LVP1, LVP2, LVP3 shown in FIG. 4) may be defined in the venting path VP, or an even number of width venting portions (e.g., the first and second width venting portions WVP1, WVP2 shown in FIG. 4) may be defined.

The length of the first length venting portion LVP1 in the first direction X is greater than the length of the first width venting portion WVP1 in the second direction Y, and the inlet IP and the outlet OP are located at both ends of the first sealing portion SLP1, respectively, so that the maximum accumulated flow rate value of the vented internal gas is increased, thereby allowing more internal gas to be trapped inside the pouch case 200.

Referring to FIGS. 4 and 5, the first sealing portion SLP1 may have a layered structure including an inner resin layer 211, a metal layer 212, and an outer resin layer 213.

In an embodiment, the inner resin layer 211 may include a venting path VP and an adhesive portion ADS. In other words, the venting path VP may be formed in the inner resin layer 211. When viewed in cross-section, the thickness of the venting path VP may be greater than the thickness of the adhesive portion ADS. Accordingly, the sealing strength of the venting path VP may be implemented to be less than the sealing strength of the adhesive portion ADS. For example, the thickness of the venting path VP may be 105% to 120% of the thickness of the adhesive portion ADS.

Prior to sealing, the thickness of the inner resin layer 211 included in each of the upper case 210 and the lower case 220 may be the same and constant. When heat is applied during sealing, the inner resin layer 211 of the upper case 210 and the inner resin layer 211 of the lower case 220 that are in contact with each other may melt to become fluid. In this case, when more pressure is applied to one part, the fluidized inner resin layer 211 moves to the side where less pressure is applied and gathers, and thus there may be a difference in thickness of the inner resin layer 211 after sealing is completed. The thickness of the inner resin layer 211 is thin in the part where a lot of pressure is applied during sealing, and the thickness of the inner resin layer 211 is thick in the part where less pressure is applied. The part where a lot of pressure is applied during sealing is the strong sealing section, and the part where less pressure is applied is the weak sealing section.

In an embodiment, the thickness of the metal layer 212 and the thickness of the outer resin layer 213 may each be constant. Accordingly, as shown in FIG. 5, when the venting path VP is formed toward the upper case 210, a step may be formed on the upper surface of the upper case 210.

However, the present disclosure is not limited thereto. In embodiments of the present disclosure, various structures capable of implementing a relatively small sealing strength of the venting path VP may be applied. For example, in another embodiment, the venting path VP may be formed toward the lower case 220, and in still another embodiment, the venting path VP may also be formed in both the upper case 210 and the lower case 220.

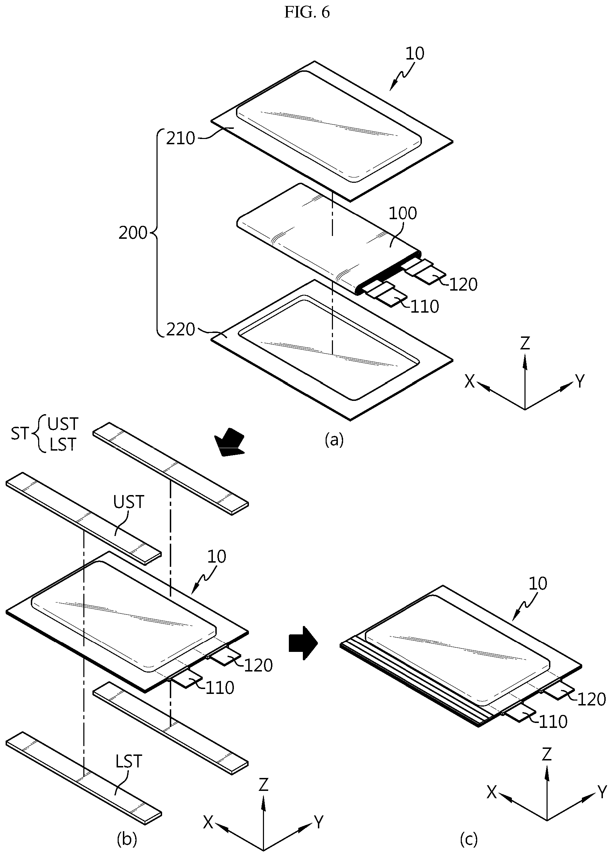

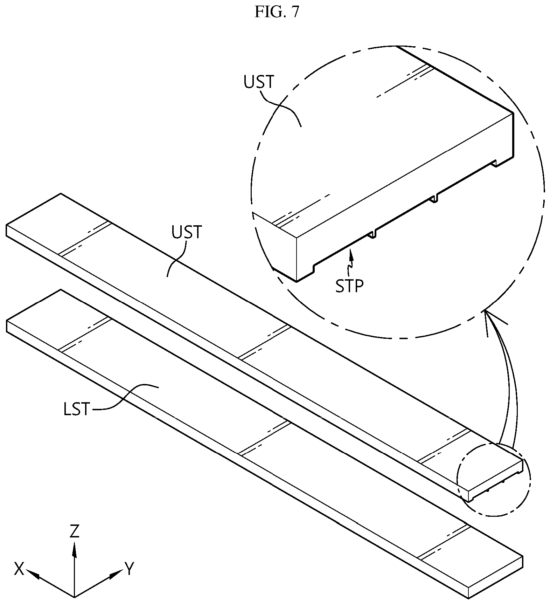

FIG. 6 is a perspective view for describing a method of manufacturing the battery cell of FIG. 1, and FIG. 7 is a perspective view for describing the sealing tool of FIG. 6.

Referring to FIGS. 6 and 7, the battery cell 10 is composed of an electrode assembly 100 and a pouch case 200, wherein the electrode assembly 100 may include a general structure of a secondary battery cell such as an electrode current collector, an electrode tab, and the like, and the first and second electrode leads 110, 120 functioning as electrodes of the secondary battery may be attached to electrode tabs of the corresponding polarity by welding or the like.

As shown in FIG. 6(a), the electrode assembly 100 may be accommodated in the receiving portion SDP of the pouch case 200 so that portions of the positive electrode lead 110 and the negative electrode lead 120 of the electrode assembly 100 are exposed to the outside. In addition, an electrolyte may be injected together into the receiving portion SDP.

Thereafter, as shown in FIG. 6(b), when the electrode assembly 100 is accommodated in the receiving portion SDP, the upper case 210 and lower case 220 may be brought close to each other so that the positive electrode lead 110 and the negative electrode lead 120 are exposed to the outside, thereby forming the outer shape of the sealing portion SLP.

Thereafter, as shown in FIG. 6(c), the outer peripheral surfaces of the upper case 210 and the lower case 220 may be sealed through a thermal fusion process. The thermal fusion process may be performed by way of applying heat and pressure to the sealing portion SLP by the sealing device ST.

For example, the sealing device ST may include an upper sealing tool UST having a shape corresponding to the upper case 210 of the first sealing portion SLP1 and a lower sealing tool LST having a shape corresponding to the lower case 220 of the first sealing portion SLP1. The upper sealing tool UST may apply pressure to the first sealing portion SLP1 from the upper part of the first sealing portion SLP1, and the lower sealing tool LST may apply pressure to the first sealing portion SLP1 from the lower part of the first sealing portion SLP1.

The upper case 210 and the lower case 220 may be placed between the upper sealing tool UST and the lower sealing tool LST, and heat and pressure may be applied to form the sealing portion SLP. In at least one of the upper sealing tool UST and the lower sealing tool LST, a step may be formed to correspond to the venting path VP described above with reference to FIG. 4. The body of at least one of the upper sealing tool UST and the lower sealing tool LST may have the step formed in an intaglio on a surface in contact with the sealing portion SLP.

As shown in FIG. 7, a step STP may be formed in the upper sealing tool UST to correspond to the venting path VP described above with reference to FIG. 4. For example, the step STP may be formed to correspond to the inlet IP, the first length venting portion LVP1, the first width venting portion WVP1, the second length venting portion LVP2, the second width venting portion WVP2, the third length venting portion LVP3, and the outlet OP described above with reference to FIG. 4.

In an embodiment, the body thickness of the upper sealing tool UST in the area where the step STP is formed may be formed smaller than the body thickness of the upper sealing tool UST in the area where the step STP is not formed. For example, the lower surface of the upper sealing tool UST in the area where pressure is applied to the venting path VP may be formed higher than the lower surface of the upper sealing tool UST in the area where pressure is applied to the adhesive portion ADS. Accordingly, the pressure applied to the first sealing portion SLP1 by the area where the step STP is formed may be less than the pressure applied to the first sealing portion SLP1 by the area where the step STP is not formed.

While the existing sealing tool has an overall flat surface in contact with the pouch case, the sealing tool according to the present disclosure has a step, so that the height for each position is different, and the sealing pressure for each position and the corresponding sealing strength may be adjusted accordingly. In this way, the venting path VP may be easily formed in the battery cell 10 using the sealing device ST according to the present disclosure.

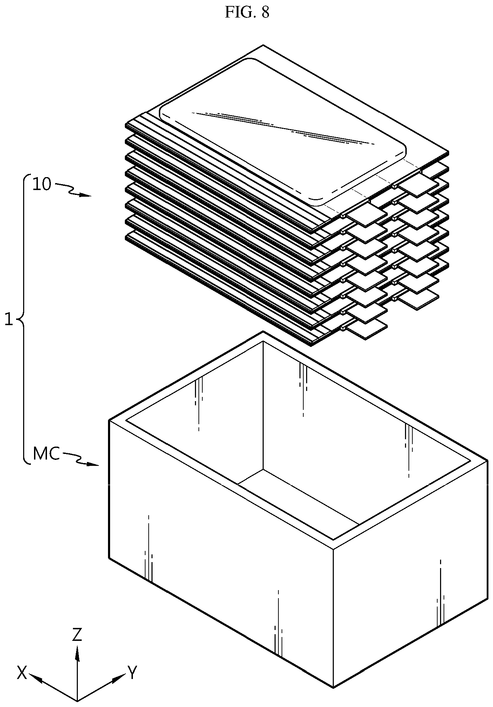

FIG. 8 is a perspective view for describing a battery module including the battery cell of FIG. 1.

Referring to FIG. 8, the battery module 1 according to an embodiment of the present disclosure may include the battery cells 10 described with reference to FIG. 1 and a module case MC accommodating the battery cells 10.

While small mobile devices use one or two to four battery cells per device, medium to large devices such as vehicles require high output and large capacity. Therefore, a medium to large battery module having a cell stack in which a plurality of battery cells are electrically connected is used. The battery module 1 manufactured by electrically connecting battery cells 10 may be used as such a medium to large battery module. Each of the battery cells 10 is connected to each other so as to secure the necessary power according to the purpose for which the power of the battery module 1 is required.

In the battery module 1 according to an embodiment, the battery cells 10 may be accommodated in the module case MC by aligning the venting path VP. As shown in FIG. 8, each of the inlets IP of the battery cells 10 may be aligned side by side in one direction, and each of the outlets OP may be aligned side by side in the one direction. Accordingly, it is possible to induce the internal gas of the battery cells 10 to be vented in a specific direction. Therefore, the safety of the battery module 1 may be improved.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

## Claims

1. A battery cell comprising an electrode assembly and a pouch case for sealing the electrode assembly together with an electrolyte,
wherein the pouch case comprises:
a receiving portion in which the electrode assembly is accommodated; and
a sealing portion disposed on the outside of the receiving portion to seal the electrode assembly,
wherein the sealing portion comprises a strong sealing section and a weak sealing section, and a venting path comprising an inlet located on the inner surface of the sealing portion to be connected to the receiving portion and an outlet located on the outer surface of the sealing portion to be integrally connected to the inlet is formed by the weak sealing section in the sealing portion.

2. The battery cell according to claim 1,
wherein through the venting path, the gas generated in the receiving portion is discharged to the outside of the receiving portion.

3. The battery cell according to claim 1,
wherein the sealing portion has:
a first sealing portion extending in a first direction and having the venting path formed therein; and
a second sealing portion extending in a second direction intersecting the first direction,
wherein the venting path comprises:
at least one length venting portion extending in the first direction; and
a width venting portion extending in the second direction and connected to the length venting portion.

4. The battery cell according to claim 3,
wherein a length of the first sealing portion in the first direction is greater than a length of the second sealing portion in the second direction, and
a length of the length venting portion in the first direction is greater than a length of the width venting portion in the second direction.

5. The battery cell according to claim 3,
wherein a lead of the electrode assembly protrudes through the second sealing portion.

6. The battery cell according to claim 3,
wherein the inlet is located at one end of the first sealing portion, and
the outlet is located at the other end of the first sealing portion.

7. The battery cell according to claim 3,
wherein the sealing portion further comprises:
a third sealing portion extending in the first direction; and
a fourth sealing portion extending in the second direction,
wherein the venting path is not formed in the third sealing portion.

8. The battery cell according to claim 1,
wherein the sealing portion comprises an inner resin layer, a metal layer covering the inner resin layer, and an outer resin layer covering the metal layer,
wherein the inner resin layer comprises the venting path and an adhesive portion that contacts the venting path and seals the electrode assembly,
wherein a sealing strength of the venting path is less than a sealing strength of the adhesive portion.

9. The battery cell according to claim 8,
wherein a thickness of the venting path is greater than a thickness of the adhesive portion.

10. The battery cell according to claim 8,
wherein a thickness of the metal layer is constant, and
a thickness of the outer resin layer is constant.

11. A battery module comprising battery cells according to any one of claims 1 to 10; and
a module case accommodating the battery cells,
wherein each of the inlets of the battery cells is aligned side by side in one direction, and
each of the outlets of the battery cells is aligned side by side in the one direction.

12. A sealing device for sealing a pouch case, comprising:
an upper sealing tool that applies pressure to a sealing portion from an upper part of the sealing portion included in the pouch case; and
a lower sealing tool that applies pressure to the sealing portion from a lower part of the sealing portion included in the pouch case,
wherein at least one of the upper sealing tool and the lower sealing tool has a step formed to correspond to a venting path comprising an inlet located on an inner surface of the sealing portion and an outlet located on an outer surface of the sealing portion to be integrally connected to the inlet.

13. The sealing device according to claim 12,
wherein a pressure applied to the sealing portion by an area where the step is formed is smaller than a pressure applied to the sealing portion by an area where the step is not formed.

14. The sealing device according to claim 13,
wherein a body of at least one of the upper sealing tool and the lower sealing tool has the step formed in an intaglio on a surface in contact with the sealing portion, so that a body thickness of the area where the step is formed is smaller than a body thickness of the area where the step is not formed.

15. The sealing device according to claim 12,
wherein the sealing portion has:
a first sealing portion extending in a first direction and having the venting path formed therein; and
a second sealing portion extending in a second direction intersecting the first direction,
wherein the venting path comprises at least one length venting portion extending in the first direction; and a width venting portion extending in the second direction and connected to the length venting portion,
wherein the step is formed to correspond to the length venting portion and the width venting portion.
